# EUROPEAN PATENT APPLICATION

(11) **EP 4 503 837 A1**
(43) Date of publication of application: **05.02.2025**
(21) Application number: 23778328.7
(22) Date of filing: 29.03.2023
(51) Int. Cl.: H04W 76/10

(54) **METHOD FOR INITIATING BSC LINK ESTABLISHMENT, AND TERMINAL AND NETWORK-SIDE DEVICE**

(30) Priority: 31.03.2022 CN 202210346254
(71) Applicant: Vivo Mobile Communication Co., Ltd., Dongguan, Guangdong 523863 (CN)
(72) Inventor: LIU, Xuanbing, Dongguan, Guangdong 523863 (CN)
(74) Representative: Shieldmark
(86) International application number: PCT/CN2023/084875
(87) International publication number: WO 2023/185963

(57) **Abstract**

The present application discloses a method for initiating establishment of a BSC link, a terminal, and a network side device, and belongs to the field of communication technologies. The method for initiating establishment of a BSC link in embodiments of the present application is applied to a BSC system. The BSC system includes a first device, a network side device, and a BSC terminal. The method includes: receiving, by the first device, first information from the network side device, where the first information is used to initiate establishment of a BSC link.

## Description

### CROSS-REFERENCE TO RELATED APPLICATIONS

The present application claims priority to Chinese Patent Application No. 202210346254.3, filed on March 31, 2022 and entitled "METHOD FOR INITIATING ESTABLISHMENT OF BSC LINK, TERMINAL, AND NETWORK SIDE DEVICE", which is incorporated herein by reference in its entirety.

### TECHNICAL FIELD

The present application belongs to the field of communication technologies, and specifically, to a method for initiating establishment of a BSC link, a terminal, and a network side device.

### BACKGROUND

Backscatter communications (Backscatter Communications, BSC) means that a backscatter communications device performs signal modulation based on a radio frequency signal from another device or the environment, to transmit information. The backscatter communications device can be an electronic tag (Tag) in a traditional radio frequency communication system or a passive Internet of Things device. As a passive or low energy consumption technology, the backscatter communications technology has the technical characteristic that a signal can be transmitted by changing a characteristic such as phase or amplitude information of a received ambient radio frequency signal, to achieve information transmission with extremely low power consumption or zero power consumption.

In terminal-assisted backscatter communications, a terminal can be used as a radio frequency source, or configured to forward downlink data or forward uplink data, or the like. In this case, how to initiate establishment of a BSC link is a problem that needs to be urgently solved by those skilled in the art.

### SUMMARY

Embodiments of the present application provide a method for initiating establishment of a BSC link, a terminal, and a network side device, which can solve the problem of how to initiate establishment of a BSC link.

According to a first aspect, a method for initiating establishment of a BSC link is provided, applied to a BSC system, where the BSC system includes a first device, a network side device, and a BSC terminal, and the method includes:
receiving, by the first device, first information from the network side device, where the first information is used to initiate establishment of the BSC link.

According to a second aspect, a method for initiating establishment of a BSC link is provided, applied to a BSC system, where the BSC system includes a first device, a network side device, and a BSC terminal, and the method includes:
transmitting, by the network side device, first information to a target device, where the first information is used to initiate establishment of the BSC link, and the target device includes at least one of the following: the first device and the BSC terminal.

According to a third aspect, a method for initiating establishment of a BSC link is provided, applied to a BSC system, where the BSC system includes a first device, a network side device, and a BSC terminal, and the method includes:
receiving, by the BSC terminal, first information transmitted by the network side device; where the first information is used to initiate establishment of the BSC link; and
transmitting, by the BSC terminal, first tag indication information to the first device through backscattering based on the first information.

According to a fourth aspect, an apparatus for initiating establishment of a BSC link is provided, applied to a BSC system, where the BSC system includes a first device, a network side device, and a BSC terminal, and the apparatus includes:
a receiving module, configured to receive first information from the network side device, where the first information is used to initiate establishment of the BSC link.

According to a fifth aspect, an apparatus for initiating establishment of a BSC link is provided, applied to a BSC system, where the BSC system includes a first device, a network side device, and a BSC terminal, and the apparatus includes:
a transmitting module, configured to transmit first information to a target device, where the first information is used to initiate establishment of the BSC link, and the target device includes at least one of the following: the first device and the BSC terminal.

According to a sixth aspect, an apparatus for initiating establishment of a BSC link is provided, applied to a BSC system, where the BSC system includes a first device, a network side device, and a BSC terminal, and the apparatus includes:
a receiving module, configured to receive first information transmitted by the network side device; where the first information is used to initiate establishment of the BSC link; and
a transmitting module, configured to transmit first tag indication information to the first device through backscattering based on the first information.

According to a seventh aspect, a first device is provided, including a processor and a memory, where the memory stores a program or an instruction executable on the processor, and when being executed by the processor, the program or the instruction implements steps of the method according to the first aspect.

According to an eighth aspect, a first device is provided, including a processor and a communication interface, where the communication interface is configured to: receive first information from a network side device, where the first information is used to initiate establishment of a BSC link.

According to a ninth aspect, a network side device is provided, including a processor and a memory, where the memory stores a program or an instruction executable on the processor, and when being executed by the processor, the program or the instruction implements steps of the method according to the second aspect.

According to a tenth aspect, a network side device is provided, including a processor and a communication interface, where the communication interface is configured to transmit first information to a target device, the first information is used to initiate establishment of a BSC link, and the target device includes at least one of the following: a first device and a BSC terminal.

According to an eleventh aspect, a BSC terminal is provided, including a processor and a memory, where the memory stores a program or an instruction executable on the processor, and when being executed by the processor, the program or the instruction implements steps of the method according to the third aspect.

According to a twelfth aspect, a BSC terminal is provided, including a processor and a communication interface, where the communication interface is configured to receive first information transmitted by a network side device; where the first information is used to initiate establishment of a BSC link; and transmit first tag indication information to the first device through backscattering based on the first information.

According to a thirteenth aspect, a communication system is provided, including: a first device, a network side device, and a BSC terminal. The first device can be configured to perform the steps of the method for initiating establishment of a BSC link according to the first aspect. The network side device can be configured to perform the steps of the method for initiating establishment of a BSC link according to the second aspect. The BSC terminal may be configured to perform the steps of the method for initiating establishment of a BSC link according to the third aspect.

According to a fourteenth aspect, a readable storage medium is provided, where the readable storage medium stores a program or an instruction, and when being executed by a processor, the program or the instruction implements the steps of the method according to the first aspect, the steps of the method according to the second aspect, or the steps of the method according to the third aspect.

According to a fifteenth aspect, a chip is provided, where the chip includes a processor and a communication interface, the communication interface is coupled to the processor, and the processor is configured to run a program or an instruction, to implement the method according to the first aspect, the method according to the second aspect, or the method according to the third aspect.

According to a sixteenth aspect, a computer program/program product is provided, where the computer program/program product is stored in a storage medium, and the computer program/program product is executed by at least one processor to implement the steps of the method for initiating establishment of a BSC link according to the first aspect, the second aspect, or the third aspect.

In the embodiments of the present application, the network side device initiates establishment of a BSC link, that is, the first device receives the first information from the network side device, where the first information is used to initiate establishment of a BSC link. Therefore, the above solution implements how to initiate establishment of a BSC link, and the implementation process is simple and the device implementation complexity is low.

### BRIEF DESCRIPTION OF THE DRAWINGS

FIG. 1 is a structural diagram of a wireless communication system to which an embodiment of the present application is applicable;
FIG. 2 is a schematic diagram of a principle of backscatter communications according to an embodiment of the present application;
FIG. 3 is a schematic diagram of an MBCS according to an embodiment of the present application;
FIG. 4 is a schematic diagram of a BBCS according to an embodiment of the present application;
FIG. 5 is a first schematic architectural diagram of cellular networking of backscatter communications according to an embodiment of the present application;
FIG. 6 is a second schematic architectural diagram of cellular networking of backscatter communications according to an embodiment of the present application;
FIG. 7 is a third schematic architectural diagram of cellular networking of backscatter communications according to an embodiment of the present application;
FIG. 8 is a fourth schematic architectural diagram of cellular networking of backscatter communications according to an embodiment of the present application;
FIG. 9 is a fifth schematic architectural diagram of cellular networking of backscatter communications according to an embodiment of the present application;
FIG. 10 is a sixth schematic architectural diagram of cellular networking of backscatter communications according to an embodiment of the present application;
FIG. 11 is a seventh schematic architectural diagram of cellular networking of backscatter communications according to an embodiment of the present application;
FIG. 12 is a first schematic flowchart of a method for initiating establishment of a BSC link according to an embodiment of the present application;
FIG. 13 is a second schematic flowchart of a method for initiating establishment of a BSC link according to an embodiment of the present application;
FIG. 14 is a third schematic flowchart of a method for initiating establishment of a BSC link according to an embodiment of the present application;
FIG. 15 is a first schematic structural diagram of an apparatus for initiating establishment of a BSC link according to an embodiment of the present application;
FIG. 16 is a second schematic structural diagram of an apparatus for initiating establishment of a BSC link according to an embodiment of the present application;
FIG. 17 is a third schematic structural diagram of an apparatus for initiating establishment of a BSC link according to an embodiment of the present application;
FIG. 18 is a schematic structural diagram of a communication device according to an embodiment of the present application;
FIG. 19 is a schematic diagram of a hardware structure of a terminal according to an embodiment of the present application; and
FIG. 20 is a schematic structural diagram of a network side device according to an embodiment of the present application.

### DETAILED DESCRIPTION

The following clearly describes the technical solutions in the embodiments of the present application with reference to the accompanying drawings in the embodiments of the present application. Obviously, the described embodiments are some but not all of the embodiments of the present application. All other embodiments obtained by persons of ordinary skill in the art based on the embodiments of the present application shall fall within the scope of protection of the present application.

In the specification and claims of the present application, the terms such as "first" and "second" are used for distinguishing similar objects, and are not necessarily used to describe a particular order or sequence. It is to be understood that the terms so used are interchangeable under appropriate circumstances such that the embodiments of the application can be implemented in sequences other than those illustrated or described herein, and "first" and "second" generally distinguish objects of a same type, and the number of objects is not limited. For example, there may be one or more first objects. In addition, in the specification and claims, "and/or" means at least one of connected objects, and the character "/" generally means that associated objects are in an "or" relationship.

It should be noted that the technology described in the embodiments of the present application is not limited to a long term evolution (Long Term Evolution, LTE)/LTE-advanced (LTE-Advanced, LTE-A) system, and may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of the present application are often used interchangeably, and the described technology can be used not only for the systems and radio technologies mentioned above, but also for other systems and radio technologies. However, a new radio (New Radio, NR) system is described in the following description for illustrative purposes, and the NR terminology is used in most of the following description, although these technologies can also be applied to applications other than the NR system application, such as the 6th generation (6th Generation, 6G) communication system.

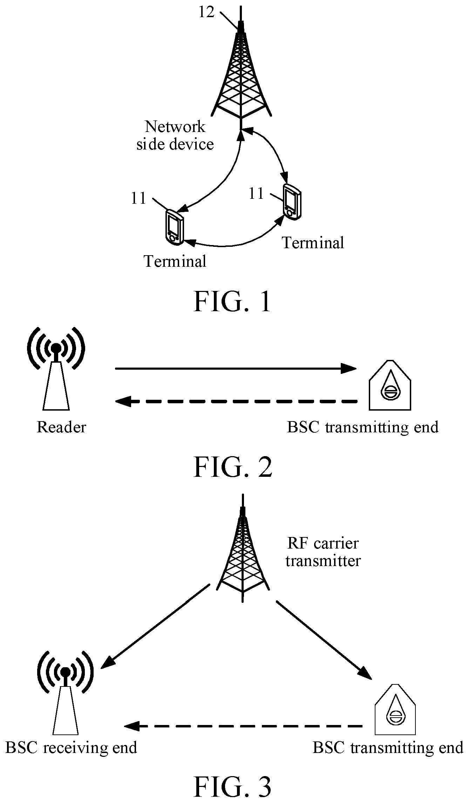

FIG. 1 is a block diagram of a wireless communication system to which an embodiment of the present application is applicable. The wireless communication system includes a terminal 11 and a network side device 12. The terminal 11 may be a mobile phone, a tablet personal computer (Tablet Personal Computer), a laptop computer (Laptop Computer) or a notebook computer, a personal digital Assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), a pedestrian terminal (PUE), a smart home appliance (home equipment with a wireless communication function, such as a refrigerator, a TV, a washing machine or a furniture), and terminal side equipment such as a game console, a personal computer (Personal Computer, PC), an ATM or a self-service machine. The wearable device includes: smart watches, smart bracelets, smart headphones, smart glasses, smart jewelry (smart bracelets, smart rings, smart necklaces, smart anklets, or the like), smart wristbands, smart clothing, or the like. It should be noted that the specific type of the terminal 11 is not limited in the embodiments of the present application. The network side device 12 may include an access network device or a core network device, where the access network device 12 may also be called a radio access network device, a radio access network (Radio Access Network, RAN), a radio access network function or a radio access network unit. The access network device 12 may include a base station, a WLAN access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited. The core network device may include but is not limited to at least one of the following: core network nodes, core network functions, mobility management entities (Mobility Management Entity, MME), access and mobility management functions (Access and Mobility Management Function, AMF), session management functions (Session Management Function, SMF), user plane functions (User Plane Function, UPF), policy control functions (Policy Control Function, PCF), policy and charging rules functions (Policy and Charging Rules Function, PCRF), edge application server discovery functions (Edge Application Server Discovery Function, EASDF), unified data management (Unified Data Management, UDM), unified data repository (Unified Data Repository, UDR), home subscriber servers (Home Subscriber Server, HSS), centralized network configuration (Centralized network configuration, CNC), network repository functions (Network Repository Function, NRF), network exposure functions (Network Exposure Function, NEF), local NEFs (Local NEF, or L-NEF), binding support functions (Binding Support Function, BSF), application functions (Application Function, AF), or the like. It should be noted that in the embodiments of the present application, only the core network device in the NR system is used as an example for introduction, and the specific type of the core network device is not limited.

Backscatter communications BSC means that a backscatter communications device performs signal modulation based on a radio frequency signal from another device or the environment, to transmit information. A backscatter communications terminal (BSC terminal, also known as BSC Tag or BSC UE) can be an electronic tag in traditional RFID, or a passive Internet of Things IoT (Passive-IoT) device, which are collectively referred to as BSC terminals in the embodiments of the present application for convenience.

As a passive or low energy consumption technology, the BSC technology has the technical characteristic that a signal can be transmitted by changing a characteristic such as phase or amplitude information of a received environmental radio frequency signal, to achieve information transmission with extremely low power consumption or zero power consumption.

From the perspective of energy supply modes, backscatter communications terminals (BSC Tag) can be divided into three modes: completely passive (Passive), semi-passive (Semi-passive), and active (active).

For passive backscatter communications, the BSC Tag first performs energy harvesting (Energy harvesting) from external electromagnetic waves, supplies energy to internal channel coding and modulation circuit modules or the like to work, and at the same time, communicates by backscattering radio frequency signals, thereby achieving communication with zero power consumption.

The semi-passive BSC Tag supplies energy to an internal circuit module through its own battery and communicates by backscattering radio frequency signals. Since its internal battery is only used for simple internal channel coding and modulation circuit modules or the like, the power consumption is very low. Therefore, the battery life of the BSC Tag can reach more than ten years. All radio frequency signals from the outside can be used for backscatter communications without storing part of energy for power supply.

For the active BSC Tag, a built-in battery is not only used for simple internal channel coding and modulation circuits or the like to work, but can also be used for circuits such as power amplifiers (Power Amplifier, PA) and low noise power amplifiers (Low Noise Amplifier, LNA) to work, thus enabling more complex signal modulation and demodulation of backscatter communications.

Architectures of backscatter communications can be divided into monostatic backscatter communication systems (Monostatic backscatter communication systems, MBCSs), bistatic backscatter communication systems (Bistatic backscatter communication systems, BBCSs), and ambient backscatter communication systems (Ambient backscatter communication systems, ABCSs).

FIG. 2 shows the MBCS. For example, a traditional RFID system is a typical MBCS. The system includes a BSC transmitting end (for example, a Tag) and a reader. The reader includes an RF radio frequency source and a BSC receiving end. The RF radio frequency source is configured to generate an RF radio frequency signal to supply energy to the BSC transmitting end/Tag. The BSC transmitting end backscatters the modulated RF radio frequency signal, and the BSC receiving end in the Reader receives the backscattered signal and demodulates the signal. Since the RF radio frequency source and the BSC receiving end are in the same device, such as the Reader herein, a monostatic backscatter communication system is formed. In the MBCSs system, because the RF radio frequency signal transmitted from the BSC transmitting end undergoes the double far-near effect caused by signal attenuation of a round-trip signal, the energy of the signal is attenuated greatly. Therefore, the MBCS system is generally used for short-distance backscatter communications, for example, traditional RFID applications.

Different from the MBCS system, an RF radio frequency source and a BSC receiving end in the BBCS system are separated. FIG. 3 is a schematic diagram of the BBCS system. Therefore, the BBCS avoids the problem of large round-trip signal attenuation. In addition, the performance of the BBCS communication system can be further improved by properly placing the RF radio frequency source. Similar to the BBCS system, an RF radio frequency source and a BSC receiving end in the ABCS system are also separated. However, unlike the BBCS system in which the radio frequency source is a dedicated signal radio frequency source, the radio frequency source in the ABCS system can be a radio frequency source in an available environment, for example, TV towers, cellular base stations, WiFi signals, and Bluetooth signals.

For example, a BSC usage scenario is a scenario in which a mobile terminal serving as a BSC control device (Reader) is connected to smart glasses serving as a BSC terminal (Tag). The Tag collects the energy of the signal transmitted by the mobile terminal or the energy provided by a special device, and transmits the Tag information b(t) by reflecting the signal x(t) transmitted by the mobile terminal.

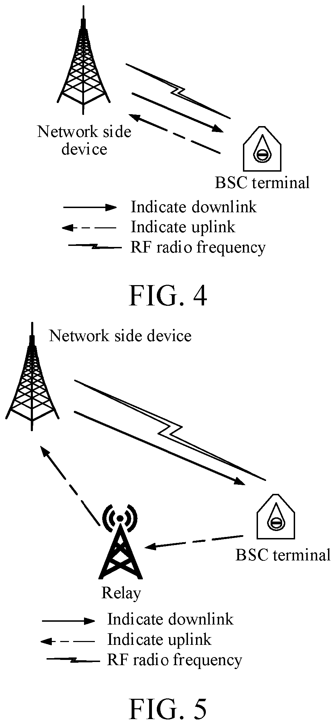

If backscatter communications terminal devices are in large-scale cellular deployment, cellular networking architectures of the backscatter communications can be divided into eight architectures as shown in FIG. 4 to FIG. 11 based on different radio frequency sources, uplink data transmission, and downlink data transmission.

In an architecture 1 shown in FIG. 4, the network side device is the radio frequency source, and is also a downlink data transmitting end of the BSC terminal, and an uplink data receiving end of the BSC terminal. That is, the network side device communicates directly with the BSC terminal. This deployment architecture has high requirements on the receiving sensitivity of the network side device and the BSC terminal, but the architecture deployment is simple.

In an architecture 2 shown in FIG. 5, the network side device is also a radio frequency source, but there is a helper or a relay, which is configured to relay uplink data from the BSC terminal to the network side device. Certainly, the helper or relay can also relay downlink data from the network side device to the BSC terminal.

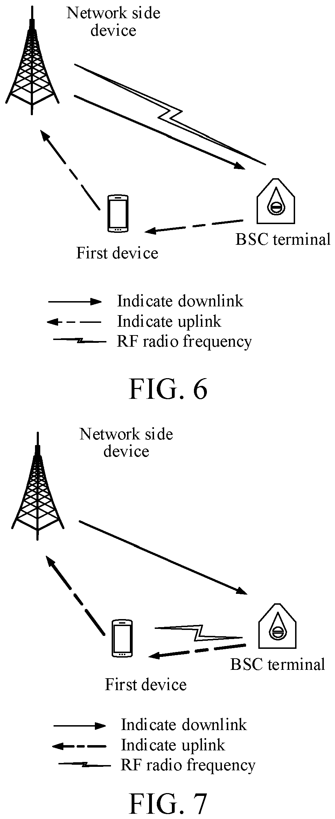

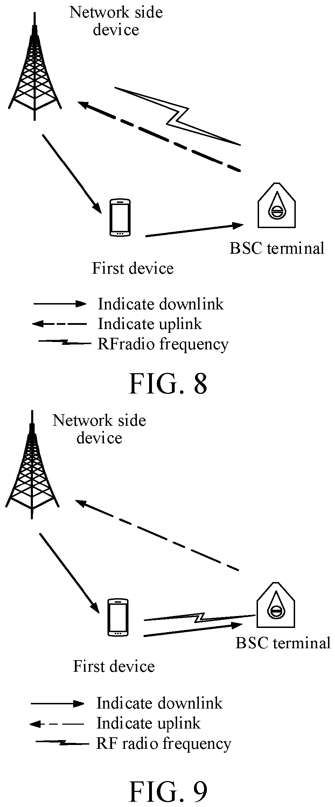

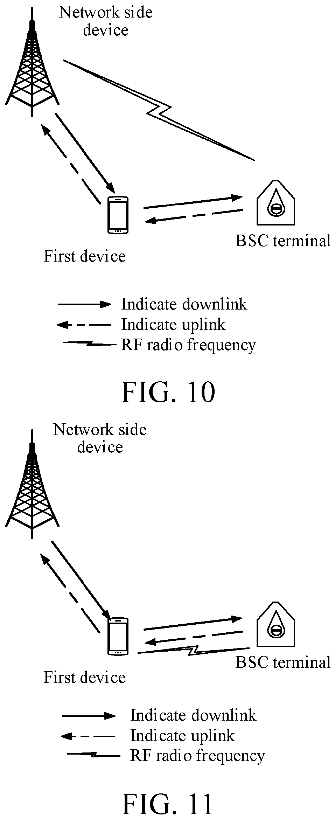

In the architecture shown in FIG. 6 to FIG. 11, the first device is used as a radio frequency source, and is configured to forward downlink data or forward uplink data, or the like. In an architecture 3-1a shown in FIG. 6, the network side device is a radio frequency source, and the network side device directly transmits downlink data to the BSC terminal. In uplink transmission, the BSC terminal first backscatters data to the first device, and then the first device forwards the data to the network side device. In an architecture 3-1b shown in FIG. 7, the first device is a radio frequency source, and the network side device directly transmits downlink data to the BSC terminal. In uplink transmission, the BSC terminal first backscatters data to the first device, and then the first device forwards the data to the network side device. In an architecture 3-2a shown in FIG. 8, the network side device is a radio frequency source, and the downlink data is first delivered by the network side device to the first device, and then forwarded by the first device to the BSC terminal. In uplink transmission, the BSC terminal directly transmits signals in reverse direction to the network side device. In an architecture 3-2b shown in FIG. 9, the radio frequency source is the first device, and the downlink data is first delivered by the network side device to the first device, and then forwarded by the first device to the BSC terminal. In uplink transmission, the BSC terminal directly transmits signals in reverse direction to the network side device. In an architecture 3-3a shown in FIG. 10, a radio frequency source is the network side device, and the downlink data is first delivered by the network side device to the first device, and then forwarded by the first device to the BSC terminal. In uplink transmission, the BSC terminal first backscatters data to the first device, and then the first device forwards the data to the network side device. In an architecture 3-3b shown in FIG. 11, the radio frequency source is the first device, and the downlink data is first delivered by the network side device to the first device, and then forwarded by the first device to the BSC terminal. In uplink transmission, the BSC terminal first backscatters data to the first device, and then the first device forwards the data to the network side device.

The first device may be a conventional terminal (or an ordinary terminal) or a relay. Conventional terminals include current mobile phones, vehicle-mounted equipment, customer premise equipment (Customer Premise Equipment, CPE), and other terminals.

In the embodiments of the present application, the network side device can initiate establishment of the BSC link, that is, the network side device transmits the first information, and the first device receives the first information from the network side device, thereby transmitting BSC data.

The method for initiating establishment of a BSC link provided by the embodiments of the present application will be described in detail below based on some embodiments and application scenarios with reference to the accompanying drawings.

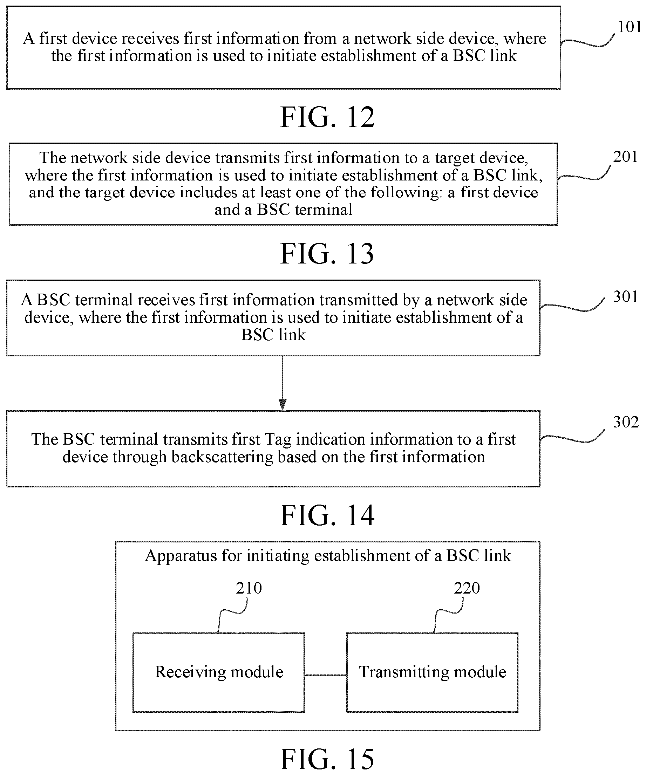

FIG. 12 is a first schematic flowchart of a method for initiating establishment of a BSC link according to an embodiment of the present application. As shown in FIG. 12, the method provided by this embodiment can be applied to a BSC system. The BSC system includes a first device, a network side device, and a BSC terminal. The method includes:

Step 101: The first device receives first information from the network side device, where the first information is used to initiate establishment of a BSC link.

Specifically, the first device may include, for example, a terminal or a relay device. The method of this embodiment may adopt the system architecture shown in FIG. 5 to FIG. 11. The network side device may initiate establishment of a BSC link, that is, the network side device transmits the first information, and the first device receives the first information from the network side device to transmit BSC data, for example, establish a BSC link and/or transmit BSC data. The first device, the BSC terminal, and the network side device communicate in BSC mode.

In the method of the embodiments, the network side device initiates establishment of a BSC link, that is, the first device receives the first information from the network side device, where the first information is used to initiate establishment of a BSC link. Therefore, the above solution implements how to initiate establishment of a BSC link, and the implementation process is simple and the device implementation complexity is low.

In an embodiment, step 101 can be implemented in the following manners:

### Manner 1:

The first device receives the first information transmitted by the network side device.

Specifically, when initiating establishment of a BSC link, the network side device may transmit first information to the first device. The first information may be indication information transmitted by the network side device to the first device based on a Uu air interface. Alternatively, the network side device transmits a BSC command to the BSC terminal and/or the first device. Optionally, the network side device transmits the first information to the BSC terminal. The first device interprets the first information to establish a BSC link and/or transmit BSC data. The first device, the BSC terminal, and the network side device communicate in BSC mode.

Optionally, the first information includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Optionally, the first information is indicated in at least one of the following manners:
a short message included in a paging message;
a paging cause included in a paging message;
paging indication information;
downlink control information DCI;
a sequence signal;
non-access stratum NAS dedicated signaling;
RRC dedicated signaling;
MAC dedicated signaling; and
physical layer dedicated signaling.

Specifically, the first information may be transmitted to the first device through the Uu air interface. In this scenario, the short message (Short Message) included in the paging message (Paging Message) may include the first information. The first information may be indicated by a paging cause (Paging Cause) included in the paging message, for example, the paging cause is BSC data forwarding (BSC data forwarding) or BSC mobile termination (BSC MT). The paging indication information may include the first information. Downlink control information (Download Control Information, DCI) may include the first information.

A sequence signal (Sequence) may correspond to the first information. For example, a sequence signal may correspond to a type of operation, such as instructing a specific terminal to start data transmission on the BSC link.

Non-access stratum (Non-Access Stratum, NAS) or radio resource control (Radio Resource Control, RRC) or media access control (Media Access Control, MAC) or physical layer dedicated signaling includes the first information. The first device receives the first information in connected mode.

Optionally, the first device may respond to the first information, and the method further includes:
initiating, by the first device, a paging response to the network side device; or
transmitting, by the first device, an acknowledgment message of the first information to the network side device.

Optionally, the initiating, by the first device, a paging response to the network side device includes:
transmitting, by the first device, an RRC connection establishment request message to the network side device, where an establishment cause field of the RRC connection establishment request message includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Specifically, the establishment cause field included in the RRC establishment request message is used to initiate the BSC.

The acknowledgment message of the first information is used to confirm reception of the first information, or confirm execution of an operation based on the indication of the first information.

Optionally, in a scenario in which the first information is a BSC command transmitted by the network side device, the first information is used to implement at least one of the following:
instructing the first device to establish a BSC uplink or a BSC downlink;
instructing the first device to release a BSC uplink or a BSC downlink;
instructing the BSC terminal to establish a BSC uplink or a BSC downlink;
instructing the BSC terminal to release a BSC uplink or a BSC downlink;
instructing the first device to start transmission of BSC data or stop transmission of BSC data;
instructing the BSC terminal to start transmission of BSC data or stop transmission of BSC data; and
indicating BSC transmission mode information; where
the BSC transmission mode information includes at least one of the following: a transmission start time, a transmission duration, a pause duration, and a transmission period.

Specifically, the first information may also be transmitted based on the BSC communication protocol, and the network side device transmits the first information to the BSC terminal and/or the first device. In a typical scenario, the network side device transmits the first information to the BSC terminal. The first device interprets the first information to transmit BSC data.

Optionally, the first information is further used to implement a TAG operation, including at least one of the following: select, inventory (Inventory), challenge, access, query, read, and write.

Specifically, the select (Select) command may refer to selecting a tag group. The select command is used to select one or more tags based on one or more values in a tag memory, and the challenge (Challenge) command can be used to challenge one or more tags. The reader can then count and access the selected tag. The reader is the network side device or the first device.

Access refers to communicating with an identified tag.

A TAG operation is, for example, reading, writing, locking or killing a Tag, or security related operations.

In the above implementation, the network side device initiates the establishment of the BSC connection. Specifically, the network side device transmits the first information to the BSC terminal and/or the first device, and the BSC link is established based on the indication of the first information, thereby achieving transmission of BSC data. It is convenient for starting or stopping the transmission of BSC data. This can be applied to a variety of terminal-assisted BSC networking architectures and can meet actual communication needs.

### Manner 2:

receiving, by the first device, first tag indication information transmitted by the BSC terminal, where the first tag indication information is transmitted through backscattering by the BSC terminal after receiving the first information from the network side device.

Specifically, when the network side device initiates establishment of the BSC link, the network side device transmits the first information to the BSC terminal, and the BSC terminal transmits the first tag indication information to the first device through backscattering after receiving the first information from the network side device.

Optionally, the first tag indication information includes at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; where
the BSC transmission mode information includes at least one of the following: a transmission start time, a transmission duration, a pause duration, and a transmission period.

In the above implementation, the network side device initiates the establishment of the BSC connection. Specifically, the network side device transmits the first information to the BSC terminal, and the BSC terminal transmits the first tag indication information to the first device through backscattering after receiving the first information from the network side device. It is convenient for starting or stopping the transmission of BSC data. This can be applied to a variety of terminal-assisted BSC networking architectures and can meet actual communication needs.

In an embodiment, in the architecture shown in FIG. 5 to FIG. 11, the method further includes:
after the first device receives the first information or responds to the first information, establishing, by the first device, a BSC connection; and
receiving, by the first device, BSC data transmitted by the network side device.

Specifically, after the first device receives the first information or responds to the first information, the first device establishes a BSC connection.

After transmitting the first information or receiving a response from the first device for the first information, the network side device transmits BSC data to the first device, including, for example, BSC commands and/or data.

Optionally, after receiving the BSC data transmitted by the network side device, the first device transmits the BSC data to the BSC terminal.

In the architecture shown in FIG. 8 to FIG. 11, the downlink data is first delivered by the network side device to the first device, and then forwarded by the first device to the BSC terminal.

Optionally, in the architecture shown in FIG. 6 and FIG. 7, downlink data is transmitted directly to the BSC terminal by the network side device.

In the method in the above embodiment, downlink data is transmitted in different manners, and this can be applied to a variety of terminal-assisted BSC networking architectures.

Optionally, the first device transmits BSC data to the BSC terminal, where the BSC data is transmitted by the BSC terminal to the network side device through backscattering.

In the architecture shown in FIG. 8 or FIG. 9, when the first device transmits uplink data, the first device first transmits the BSC data to the BSC terminal, and then the BSC terminal transmits the data to the network side device through backscattering.

Optionally, the first device receives BSC data transmitted by the BSC terminal and forwards the BSC data to the network side device.

In the architecture shown in FIG. 6, FIG. 7, FIG. 10, or FIG. 11, when the BSC terminal transmits uplink data, the BSC terminal first backscatters the data to the first device, and then the first device forwards the data to the network side device.

Optionally, in a case that the first device receives the first information, the first device receives the BSC data transmitted by the BSC terminal and forwards the BSC data to the network side device, where the first information includes transmission start indication information for the BSC data; or
in a case that the first device receives the first tag indication information, the first device receives the BSC data transmitted by the BSC terminal and forwards the BSC data to the network side device.

Optionally, in a case that the first device receives the first information, the first device stops receiving the BSC data transmitted by the BSC terminal and stops forwarding the BSC data to the network side device, where the first information includes transmission stop indication information for the BSC data.

In the method in the above embodiment, uplink data is transmitted in different manners, and this can be applied to a variety of terminal-assisted BSC networking architectures.

Optionally, the first device is a radio frequency source; and the first device starts to supply energy to the BSC terminal in any one of the following cases:
in a case that the first device receives the first information or responds to the first information; and
in a case that the first device receives the first tag indication information or responds to the first tag indication information.

Specifically, in the architecture shown in FIG. 7, FIG. 9, and FIG. 11, the first device is a radio frequency source and can supply energy to the BSC terminal. For example, after receiving the first information or responding to the first information, the first device starts to supply energy to the BSC terminal.

After receiving the first tag indication information transmitted by the BSC terminal, or after transmitting a response to the first tag indication information, the first device starts to supply energy to the BSC terminal.

After receiving the first BSC command, the first device starts to supply power to the BSC terminal.

In the above implementation, the first device can choose, according to the BSC data transmission requirement, when to start supplying energy to the BSC terminal, which has greater flexibility and can reduce the power consumption of the first device.

FIG. 13 is a second schematic flowchart of a method for initiating establishment of a BSC link according to an embodiment of the present application. As shown in FIG. 13, the method provided by this embodiment can be applied to a BSC system. The BSC system includes a first device, a network side device, and a BSC terminal. The method includes:
Step 201: The network side device transmits first information to a target device, where the first information is used to initiate establishment of a BSC link, and the target device includes at least one of the following: the first device and the BSC terminal.

Optionally, the transmitting, by the network side device, first information to the target device includes:
transmitting, by the network side device, the first information to the first device; or
transmitting, by the network side device, the first information to the BSC terminal, where the first information is used by the BSC terminal to transmit first tag indication information to the first device through backscattering, and the first tag indication information is used to initiate establishment of a BSC link.

Optionally, the first information includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Optionally, the first tag indication information includes at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; where
the BSC transmission mode information includes at least one of the following: a transmission start time, a transmission duration, a pause duration, and a transmission period.

Optionally, the first information is used to implement at least one of the following:
instructing the first device to establish a BSC uplink or a BSC downlink;
instructing the first device to release a BSC uplink or a BSC downlink;
instructing the BSC terminal to establish a BSC uplink or a BSC downlink;
instructing the BSC terminal to release a BSC uplink or a BSC downlink;
instructing the first device to start transmission of BSC data or stop transmission of BSC data;
instructing the BSC terminal to start transmission of BSC data or stop transmission of BSC data; and
indicating BSC transmission mode information; where
the BSC transmission mode information includes at least one of the following: a transmission start time, a transmission duration, a pause duration, and a transmission period.

Optionally, the first information is indicated in at least one of the following manners:
a short message included in a paging message;
a paging cause included in a paging message;
paging indication information;
downlink control information DCI;
a sequence signal;
non-access stratum NAS dedicated signaling;
radio resource control RRC dedicated signaling;
media access control MAC layer dedicated signaling; and
physical layer dedicated signaling.

Optionally, the method further includes:
transmitting, by the network side device, BSC data to the first device; or
receiving, by the network side device, BSC data transmitted by the first device, where the BSC data is transmitted by the BSC terminal to the first device.

Optionally, the transmitting, by the network side device, BSC data to the first device includes:
after the first device receives the first information or responds to the first information, transmitting, by the network side device, the BSC data to the first device.

Optionally, the method further includes:
receiving, by the network side device, BSC data transmitted by the BSC terminal, where the BSC data is transmitted through backscattering by the BSC terminal after receiving the BSC data of the first device.

Optionally, the method further includes:
receiving, by the network side device, an acknowledgment message of the first information transmitted by the first device; or
receiving, by the network side device, an RRC connection establishment request message transmitted by the first device, where an establishment cause field of the RRC connection establishment request message includes at least one of the following:
   indication information for initiating establishment of a BSC link;
   indication information for BSC uplink establishment or indication information for BSC downlink establishment;
   indication information for BSC uplink data forwarding or indication information for BSC downlink data forwarding; and
   BSC transmission mode information; where
   the BSC transmission mode information includes at least one of the following: a transmission start time, a transmission duration, a pause duration, and a transmission period.

Specific implementation processes and technical effects of the method in this embodiment are the same as those in the method embodiments on the first device side. For details, refer to detailed introduction of the method embodiments on the first device side. Details are not described again herein.

FIG. 14 is a third schematic flowchart of a method for initiating establishment of a BSC link according to an embodiment of the present application. As shown in FIG. 14, the method provided by this embodiment can be applied to a BSC system. The BSC system includes a first device, a network side device, and a BSC terminal. The method includes:
Step 301: The BSC terminal receives first information transmitted by the network side device, where the first information is used to initiate establishment of a BSC link.
Step 302: The BSC terminal transmits first tag indication information to the first device through backscattering based on the first information.

Optionally, the first tag indication information includes at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; where
the BSC transmission mode information includes at least one of the following: a transmission start time, a transmission duration, a pause duration, and a transmission period.

Optionally, the method further includes:
transmitting, by the BSC terminal, BSC data to the first device; or
transmitting, by the BSC terminal, BSC data to the network side device, where the BSC data is transmitted through backscattering by the BSC terminal after receiving the BSC data of the first device.

Specific implementation processes and technical effects of the method in this embodiment are the same as those in the method embodiments on the first device side. For details, refer to detailed introduction of the method embodiments on the first device side. Details are not described again herein.

The method for initiating establishment of a BSC link provided in the embodiments of the present application may be performed by an apparatus for initiating establishment of a BSC link. In the embodiments of the present application, the apparatus for initiating establishment of a BSC link provided in the embodiments of the present application is described by using an example in which the method for initiating establishment of a BSC link is performed by the apparatus for initiating establishment of a BSC link.

FIG. 15 is a first schematic structural diagram of an apparatus for initiating establishment of a BSC link according to an embodiment of the present application. The apparatus may be applied to a BSC system, and the BSC system includes a first device, a network side device, and a BSC terminal. The apparatus may be disposed in the first device. As shown in FIG. 15, the apparatus for initiating establishment of a BSC link in this embodiment includes:

a receiving module 210, configured to receive first information from the network side device, where the first information is used to initiate establishment of a BSC link.

Optionally, the receiving module 210 is specifically configured to:
receive the first information transmitted by the network side device;
   or
receive first tag indication information transmitted by the BSC terminal, where the first tag indication information is transmitted through backscattering by the BSC terminal after receiving the first information from the network side device.

Optionally, the first information includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Optionally, the first tag indication information includes at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; where
the BSC transmission mode information includes at least one of the following: a transmission start time, a transmission duration, a pause duration, and a transmission period.

Optionally, the first information is used to implement at least one of the following:
instructing the first device to establish a BSC uplink or a BSC downlink;
instructing the first device to release a BSC uplink or a BSC downlink;
instructing the BSC terminal to establish a BSC uplink or a BSC downlink;
instructing the BSC terminal to release a BSC uplink or a BSC downlink;
instructing the first device to start transmission of BSC data or stop transmission of BSC data;
instructing the BSC terminal to start transmission of BSC data or stop transmission of BSC data; and
indicating BSC transmission mode information; where
the BSC transmission mode information includes at least one of the following: a transmission start time, a transmission duration, a pause duration, and a transmission period.

Optionally, when the first information is transmitted through an air interface, the first information is indicated in at least one of the following manners:
a short message included in a paging message;
a paging cause included in a paging message;
paging indication information;
downlink control information DCI;
a sequence signal;
non-access stratum NAS dedicated signaling;
radio resource control RRC dedicated signaling;
media access control MAC layer dedicated signaling; and
physical layer dedicated signaling.

Optionally, the first information is further used to implement a TAG operation, including at least one of the following: select, inventory, challenge, access, query, read, and write.

Optionally, the apparatus further includes:
a processing module, configured to: after the first information is received or the first information is responded to, establish a BSC connection; and
the receiving module 210 is further configured to receive BSC data transmitted by the network side device, and transmit the BSC data to the BSC terminal.

Optionally, a transmitting module 220 is further configured to:
transmit BSC data to the BSC terminal, where the BSC data is transmitted by the BSC terminal to the network side device through backscattering.

Optionally, the receiving module 210 is further configured to:
receive BSC data transmitted by the BSC terminal and forward the BSC data to the network side device.

Optionally, the receiving module 210 is specifically configured to:
in a case that the first information is received, receive the BSC data transmitted by the BSC terminal and forward the BSC data to the network side device, where the first information includes transmission start indication information for the BSC data; or
in a case that the first tag indication information is received, receive the BSC data transmitted by the BSC terminal and forward the BSC data to the network side device.

Optionally, the receiving module 210 is further configured to:
in a case that the first information is received, stop receiving the BSC data transmitted by the BSC terminal and stop forwarding the BSC data to the network side device, where the first information includes transmission stop indication information for the BSC data.

Optionally, the transmitting module 220 is further configured to:
initiate a paging response to the network side device; or
transmit an acknowledgment message of the first information to the network side device.

Optionally, the transmitting module 220 is specifically configured to:
transmit an RRC connection establishment request message to the network side device, where an establishment cause field of the RRC connection establishment request message includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Optionally, the first device is a radio frequency source; and the first device starts to supply energy to the BSC terminal in any one of the following cases:
in a case that the first information is received or the first information is responded to; and
in a case that the first tag indication information is received or the first tag indication information is responded to.

The apparatus of this embodiment can be configured to execute the method of any one of the method embodiments on the first device side. Specific implementation processes and technical effects thereof are the same as those in the method embodiments on the first device side. For details, refer to detailed introduction of the method embodiments on the first device side. Details are not described again herein.

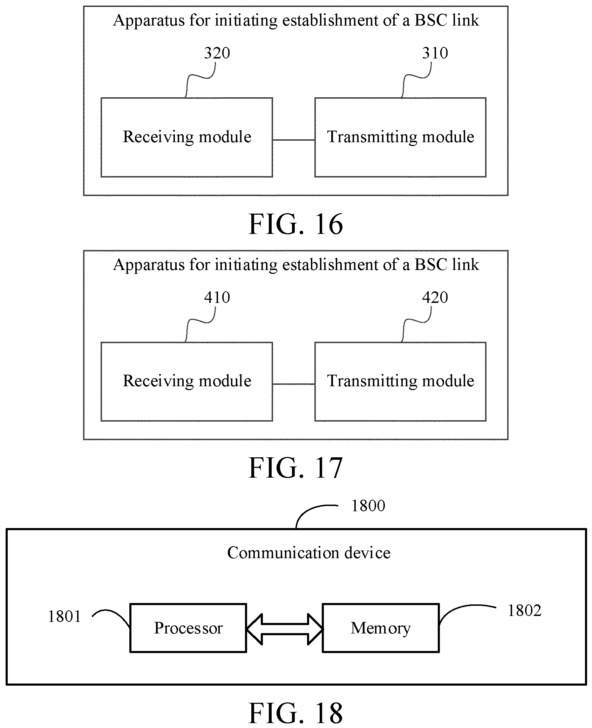

FIG. 16 is a second schematic structural diagram of an apparatus for initiating establishment of a BSC link according to an embodiment of the present application. As shown in FIG. 16, the apparatus for initiating establishment of a BSC link in this embodiment includes:
a transmitting module 310, configured to transmit first information to a target device, where the first information is used to initiate establishment of a BSC link, and the target device includes at least one of the following: a first device and a BSC terminal.

Optionally, the transmitting module 310 is specifically configured to:
transmit the first information to the first device; or
transmit the first information to the BSC terminal, where the first information is used by the BSC terminal to transmit first tag indication information to the first device through backscattering, and the first tag indication information is used to initiate establishment of a BSC link.

Optionally, the first information includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Optionally, the first tag indication information includes at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; where
the BSC transmission mode information includes at least one of the following: a transmission start time, a transmission duration, a pause duration, and a transmission period.

Optionally, the first information is used to implement at least one of the following:
instructing the first device to establish a BSC uplink or a BSC downlink;
instructing the first device to release a BSC uplink or a BSC downlink;
instructing the BSC terminal to establish a BSC uplink or a BSC downlink;
instructing the BSC terminal to release a BSC uplink or a BSC downlink;
instructing the first device to start transmission of BSC data or stop transmission of BSC data;
instructing the BSC terminal to start transmission of BSC data or stop transmission of BSC data; and
indicating BSC transmission mode information; where
the BSC transmission mode information includes at least one of the following: a transmission start time, a transmission duration, a pause duration, and a transmission period.

Optionally, the first information is indicated in at least one of the following manners:
a short message included in a paging message;
a paging cause included in a paging message;
paging indication information;
downlink control information DCI;
a sequence signal;
non-access stratum NAS dedicated signaling;
radio resource control RRC dedicated signaling;
media access control MAC layer dedicated signaling; and
physical layer dedicated signaling.

Optionally, the transmitting module 310 is further configured to:
transmit BSC data to the first device; or
a receiving module 320 is configured to receive BSC data transmitted by the first device, where the BSC data is transmitted by the BSC terminal to the first device.

Optionally, the transmitting module 310 is specifically configured to:
after the first device receives the first information or responds to the first information, transmit the BSC data to the first device.

Optionally, the receiving module 320 is further configured to:
receive BSC data transmitted by the BSC terminal, where the BSC data is transmitted through backscattering by the BSC terminal after receiving the BSC data of the first device.

Optionally, the receiving module 320 is further configured to:
receive an acknowledgment message of the first information transmitted by the first device; or
receive an RRC connection establishment request message transmitted by the first device, where an establishment cause field of the RRC connection establishment request message includes at least one of the following:
   indication information for initiating establishment of a BSC link;
   indication information for BSC uplink establishment or indication information for BSC downlink establishment;
   indication information for BSC uplink data forwarding or indication information for BSC downlink data forwarding; and
   BSC transmission mode information; where
   the BSC transmission mode information includes at least one of the following: a transmission start time, a transmission duration, a pause duration, and a transmission period.

The apparatus of this embodiment can be configured to execute the method of any one of the method embodiments on the network side. Specific implementation processes and technical effects thereof are the same as those in the method embodiments on the network side. For details, refer to detailed introduction of the method embodiments on the network side. Details are not described again herein.

FIG. 17 is a third schematic structural diagram of an apparatus for initiating establishment of a BSC link according to an embodiment of the present application. As shown in FIG. 17, the apparatus for initiating establishment of a BSC link in this embodiment includes:
a receiving module 410, configured to receive first information transmitted by the network side device; where the first information is used to initiate establishment of a BSC link; and
a transmitting module 420, configured to transmit first tag indication information to the first device through backscattering based on the first information.

Optionally, the first tag indication information includes at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; where
the BSC transmission mode information includes at least one of the following: a transmission start time, a transmission duration, a pause duration, and a transmission period. Optionally, the transmitting module 420 is further configured to:
transmit BSC data to the first device; or
transmit BSC data to the network side device, where the BSC data is transmitted through backscattering by the BSC terminal after receiving the BSC data of the first device.

The apparatus of this embodiment can be configured to execute the method of any one of the method embodiments on the BSC terminal side. Specific implementation processes and technical effects thereof are the same as those in the method embodiments on the BSC terminal side. For details, refer to detailed introduction of the method embodiments on the BSC terminal side. Details are not described again herein.

The apparatus for initiating establishment of a BSC link in the embodiments of the present application may be an electronic device, such as an electronic device with an operating system, or may be a component in the electronic device, such as an integrated circuit or a chip. The electronic device may be a terminal or other devices other than the terminal. For example, the terminal may include but is not limited to the types of terminals 11 listed above, and other devices may be servers, network attached storage (Network Attached Storage, NAS), or the like, which are not specifically limited in the embodiments of the present application.

The apparatus for initiating establishment of a BSC link according to this embodiment of the present application can implement the processes in the method embodiments in FIG. 5 to FIG. 14, and achieve the same technical effect. To avoid duplication, details are not described herein again.

Optionally, as shown in FIG. 18, an embodiment of the present application further provides a communication device 1800, including a processor 1801 and a memory 1802. The memory 1802 stores a program or an instruction executable on the processor 1801. For example, when the communication device 1800 is a terminal, when being executed by the processor 1801, the program or the instruction implements each step of the embodiments of the method for initiating establishment of a BSC link, and the same technical effect can be achieved. When the communication device 1800 is a network side device, when being executed by the processor 1801, the program or the instruction implements each step of the embodiments of the method for initiating establishment of a BSC link, and the same technical effect can be achieved. To avoid repetition, details are not described herein again.

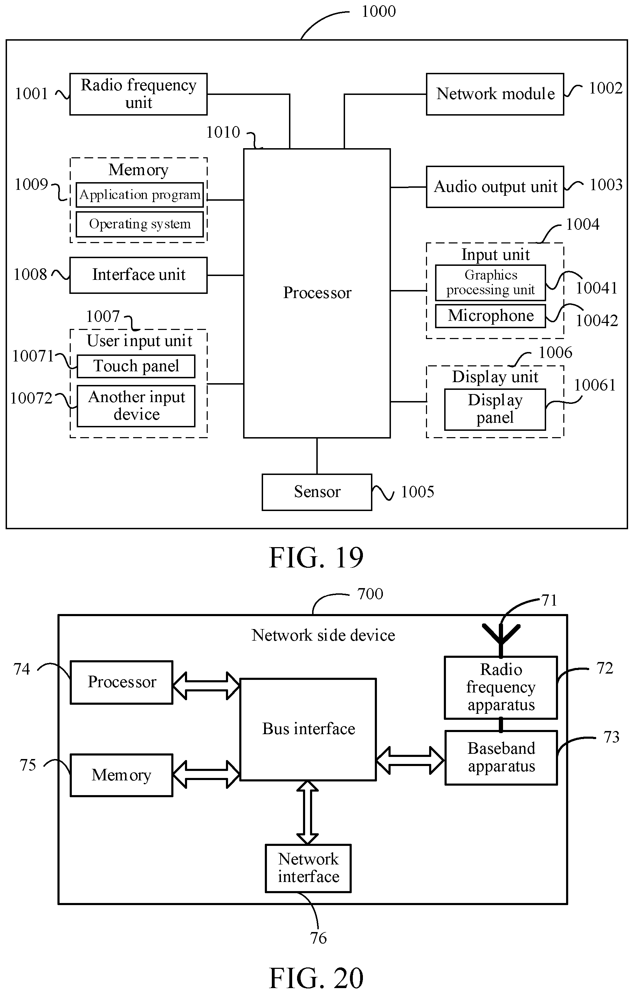

An embodiment of the present application further provides a terminal, including a processor and a communication interface. The communication interface is configured to: a receiving module, configured to receive first information from the network side device, where the first information is used to initiate establishment of a BSC link. This terminal embodiment corresponds to the method embodiment on the first device side, and each implementation process and implementation of the method embodiment can be applied to this terminal embodiment, and can achieve the same technical effect. Specifically, FIG. 19 is a schematic structural diagram of hardware of a terminal implementing an embodiment of the present application.

The terminal 1000 includes but is not limited to: at least some of a radio frequency unit 1001, a network module 1002, an audio output unit 1003, an input unit 1004, a sensor 1005, a display unit 1006, a user input unit 1007, an interface unit 1008, a memory 1009, and a processor 1010.

Those skilled in the art can understand that the terminal 1000 may further include the power supply (for example, a battery) supplying power to each component. The power supply may be logically connected to the processor 1010 by using a power management system, so as to implement functions such as charging management, discharging management and power consumption management by using the power management system. The terminal structure shown in FIG. 19 does not constitute any limitation on the terminal, and the terminal may include more or fewer components than those shown in the figure, or combine some components, or have different component arrangements. Details are not described herein again.

It should be understood that in the embodiments of the present application, the input unit 1004 may include a graphics processing unit (Graphics Processing Unit, GPU) 10041 and a microphone 10042, and the graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode or the like. Specifically, the user input unit 1007 includes at least one of a touch panel 10071 and another input device 10072. The touch panel 10071 is also called a touch screen. The touch panel 10071 may include two parts: a touch detection apparatus and a touch controller. The another input device 10072 may include, but is not limited to, a physical keyboard, a function key (such as a volume control key or an on/off key), a trackball, a mouse, and a joystick. Details are not described herein again.

In the embodiments of the present application, after receiving downlink data from the network side device, the radio frequency unit 1001 can transmit the data to the processor 1010 for processing. In addition, the radio frequency unit 1001 may transmit uplink data to the network side device. Generally, the radio frequency unit 1001 includes, but is not limited to, an antenna, at least one amplifier, a transceiver, a coupler, a low noise amplifier, a duplexer, and the like.

The memory 1009 may be configured to store software programs and various pieces of data. The memory 1009 may mainly include a first storage area storing a program or an instruction and a second storage area storing data, where the first storage area storing a program or an instruction may store an operating system, an application program or instructions required by at least one function (for example, a sound playback function or an image playback function) and the like. Besides, the memory 1009 may be a volatile memory or a non-volatile memory, or may include both a volatile memory and a non-volatile memory. The memory includes a high-speed random access memory and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of the present application includes but is not limited to these and any other suitable types of memories, for example, at least one magnetic disk storage device, flash memory device, or other non-volatile solid-state storage devices.

The processor 1010 may include one or more processing units. Optionally, the processor 1010 may integrate an application processor and a modem processor, where the application processor mainly processes an operating system, a user interface, an application program or an instruction, and the like, and the modem processor mainly processes wireless communication signals, such as a baseband processor. It may be understood that the foregoing modem processor may not be integrated into the processor 1010.

The radio frequency unit 1001 is configured to receive first information from the network side device, where the first information is used to initiate establishment of a BSC link.

Optionally, the radio frequency unit 1001 is specifically configured to:
receive the first information transmitted by the network side device;
   or
receive first tag indication information transmitted by the BSC terminal, where the first tag indication information is transmitted through backscattering by the BSC terminal after receiving the first information from the network side device.

Optionally, the first information includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Optionally, the first tag indication information includes at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; where
the BSC transmission mode information includes at least one of the following: a transmission start time, a transmission duration, a pause duration, and a transmission period.

Optionally, the first information is used to implement at least one of the following:
instructing the first device to establish a BSC uplink or a BSC downlink;
instructing the first device to release a BSC uplink or a BSC downlink;
instructing the BSC terminal to establish a BSC uplink or a BSC downlink;
instructing the BSC terminal to release a BSC uplink or a BSC downlink;
instructing the first device to start transmission of BSC data or stop transmission of BSC data;
instructing the BSC terminal to start transmission of BSC data or stop transmission of BSC data; and
indicating BSC transmission mode information; where
the BSC transmission mode information includes at least one of the following: a transmission start time, a transmission duration, a pause duration, and a transmission period.

Optionally, when the first information is transmitted through an air interface, the first information is indicated in at least one of the following manners:
a short message included in a paging message;
a paging cause included in a paging message;
paging indication information;
downlink control information DCI;
a sequence signal;
non-access stratum NAS dedicated signaling;
radio resource control RRC dedicated signaling;
media access control MAC layer dedicated signaling; and
physical layer dedicated signaling.

Optionally, the first information is further used to implement a TAG operation, including at least one of the following: select, inventory, challenge, access, query, read, and write.

Optionally, the processor 1010 is further configured to:
after the first information is received or the first information is responded to, establish a BSC connection.

Optionally, the radio frequency unit 1001 is specifically configured to:
receive BSC data transmitted by the network side device, and transmit the BSC data to the BSC terminal.

Optionally, the radio frequency unit 1001 is further configured to:
transmit BSC data to the BSC terminal, where the BSC data is transmitted by the BSC terminal to the network side device through backscattering.

Optionally, the radio frequency unit 1001 is further configured to:
receive BSC data transmitted by the BSC terminal and forward the BSC data to the network side device.

Optionally, the radio frequency unit 1001 is specifically configured to:
in a case that the first information is received, receive the BSC data transmitted by the BSC terminal and forward the BSC data to the network side device, where the first information includes transmission start indication information for the BSC data; or
in a case that the first tag indication information is received, receive the BSC data transmitted by the BSC terminal and forward the BSC data to the network side device.

Optionally, the radio frequency unit 1001 is further configured to:
in a case that the first information is received, stop receiving the BSC data transmitted by the BSC terminal and stop forwarding the BSC data to the network side device, where the first information includes transmission stop indication information for the BSC data.

Optionally, the radio frequency unit 1001 is further configured to:
initiate a paging response to the network side device; or
transmit an acknowledgment message of the first information to the network side device.

Optionally, the radio frequency unit 1001 is specifically configured to:
transmit an RRC connection establishment request message to the network side device, where an establishment cause field of the RRC connection establishment request message includes at least one of the following:
indication information for initiating establishment of a BSC link;
indication information for BSC uplink establishment or indication information for BSC downlink establishment;
indication information for BSC uplink data forwarding or indication information for BSC downlink data forwarding; and
BSC transmission mode information; where
the BSC transmission mode information includes at least one of the following: a transmission start time, a transmission duration, a pause duration, and a transmission period.

Optionally, the terminal is a radio frequency source; and the terminal starts to supply energy to the BSC terminal in any one of the following cases:
in a case that the first information is received or the first information is responded to; and
in a case that the first tag indication information is received or the first tag indication information is responded to.

Optionally, the structure of the terminal may also be used for the BSC terminal. Details are not described again herein.

An embodiment of the present application further provides a network side device, including a processor and a communication interface. The communication interface is configured to transmit first information to a target device. The first information is used to initiate establishment of a BSC link. The target device includes at least one of the following: a first device and a BSC terminal. This embodiment of the network side device corresponds to the above-mentioned method embodiment on the network side device, and each implementation process and implementation of the above-mentioned method embodiment can be applied to this embodiment of the network side device, and can achieve the same technical effect.

Specifically, an embodiment of the present application further provides a network side device. As shown in FIG. 20, the network side device 700 includes: an antenna 71, a radio frequency apparatus 72, a baseband apparatus 73, a processor 74, and a memory 75. The antenna 71 is connected to the radio frequency apparatus 72. In the uplink direction, the radio frequency apparatus 72 receives information through the antenna 71, and transmits the received information to the baseband apparatus 73 for processing. In the downlink direction, the baseband apparatus 73 processes information to be transmitted and transmits the information to the radio frequency apparatus 72, and the radio frequency apparatus 72 processes the received information and then transmits the information through the antenna 71.

A band processing apparatus may be located in the baseband apparatus 73, and the method performed by the network side device in the foregoing embodiment may be implemented in the baseband apparatus 73. The baseband apparatus 73 includes a baseband processor and a memory 75.

The baseband apparatus 73 may include, for example, at least one baseband board, and a plurality of chips are arranged on the baseband board. As shown in FIG. 20, one of the chips is, for example, the baseband processor 75, which is connected to the memory 75 through a bus interface, to invoke a program in the memory 75, so as to perform the operations of the network device shown in the foregoing method embodiment.

The network side device of the baseband apparatus 73 may further include a network interface 76 for exchanging information with the radio frequency apparatus 72, and the interface is, for example, a common public radio interface (common public radio interface, CPRI for short).

Specifically, the network side device 700 in this embodiment of the present invention further includes: an instruction or a program stored on the memory 75 and executable on the processor 74, and the processor 75 invokes the instruction or program in the memory 75 to execute the method executed by the module shown in FIG. 16, and achieve the same technical effect. To avoid repetition, details are not described herein again.

An embodiment of the present application further provides a readable storage medium. The readable storage medium stores a program or an instruction, and when being executed by a processor, the program or the instruction implements the various processes of the embodiment of the method for initiating establishment of a BSC link and the same technical effects can be achieved. To avoid repetition, details are not described herein again.

The processor is a processor in the terminal in the above embodiments. The readable storage medium includes a computer-readable storage medium, such as a computer read-only memory ROM, a random access memory RAM, a magnetic disk, an optical disc, or the like.

An embodiment of the present application further provides a chip, the chip includes a processor and a communication interface, the communication interface is coupled to the processor, and the processor is configured to run a program or an instruction to implement various processes of the embodiment of the method for initiating establishment of a BSC link and the same technical effects can be achieved. To avoid repetition, details are not described herein again.

It should be understood that the chips mentioned in the embodiments of the present application may also be called a system-level chip, a system chip, a chip system, or a system-on-chip.

An embodiment of the present application further provides a computer program/program product, the computer program/program product is stored in a storage medium, and the computer program/program product is executed by at least one processor to implement various processes of the embodiment of the method for initiating establishment of a BSC link, and the same technical effects can be achieved. To avoid repetition, details are not described herein again.

An embodiment of the present application further provides a communication system, including: a first device, a network side device, and a BSC terminal. The first device can be configured to perform the steps of the method for initiating establishment of a BSC link. The network side device can be configured to perform the steps of the method for initiating establishment of a BSC link. The BSC terminal may be configured to perform the steps of the method for initiating establishment of a BSC link.

It should be noted that, in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. Without more limitations, elements defined by the sentence "including one" does not exclude that there are still other same elements in the process, method, article, or apparatus. In addition, it should be pointed out that the scope of the methods and apparatuses in the implementations of the present application is not limited to performing functions in the order shown or discussed, and may also include performing functions in a substantially simultaneous manner or in a reverse order according to the functions involved, for example, the described methods may be performed in an order different from that described, and various steps may also be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a necessary common hardware platform or by using hardware. However, in many cases, the former is a better implementation. Based on such an understanding, the technical solutions of the present application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of the present application.

The embodiments of the present application are described above with reference to the accompanying drawings, but the present application is not limited to the above specific implementations, and the above specific implementations are only illustrative and not restrictive. Under the enlightenment of the present application, those of ordinary skill in the art can make many forms without departing from the purpose of the present application and the protection scope of the claims, all of which fall within the protection of the present application.

## Claims

1. A method for initiating establishment of a backscatter communications BSC link, applied to a BSC system, wherein the BSC system comprises a first device, a network side device, and a BSC terminal, and the method comprises:
receiving, by the first device, first information from the network side device, wherein the first information is used to initiate establishment of the BSC link.

2. The method for initiating establishment of a BSC link according to claim 1, wherein the receiving, by the first device, first information from the network side device comprises:
receiving, by the first device, the first information transmitted by the network side device;
or
receiving, by the first device, first tag indication information transmitted by the BSC terminal, wherein the first tag indication information is transmitted through backscattering by the BSC terminal after receiving the first information from the network side device.

3. The method for initiating establishment of a BSC link according to claim 2, wherein the first information comprises at least one of the following:
indication information for initiating establishment of the BSC link;
indication information for BSC uplink establishment or indication information for BSC downlink establishment;
indication information for BSC uplink data forwarding or indication information for BSC downlink data forwarding; and
BSC transmission mode information; wherein
the BSC transmission mode information comprises at least one of the following: a transmission start time, a transmission duration, a pause duration, and a transmission period.

4. The method for initiating establishment of a BSC link according to claim 2, wherein the first tag indication information comprises at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; wherein
the BSC transmission mode information comprises at least one of the following: a transmission start time, a transmission duration, a pause duration, and a transmission period.

5. The method for initiating establishment of a BSC link according to claim 2, wherein the first information is used to implement at least one of the following:
instructing the first device to establish a BSC uplink or a BSC downlink;
instructing the first device to release a BSC uplink or a BSC downlink;
instructing the BSC terminal to establish a BSC uplink or a BSC downlink;
instructing the BSC terminal to release a BSC uplink or a BSC downlink;
instructing the first device to start transmission of BSC data or stop transmission of BSC data;
instructing the BSC terminal to start transmission of BSC data or stop transmission of BSC data; and
indicating BSC transmission mode information; wherein
the BSC transmission mode information comprises at least one of the following: a transmission start time, a transmission duration, a pause duration, and a transmission period.

6. The method for initiating establishment of a BSC link according to claim 2 or 3, wherein when the first information is transmitted through an air interface, the first information is indicated in at least one of the following manners:
a short message comprised in a paging message;
a paging cause comprised in a paging message;
paging indication information;
downlink control information DCI;
a sequence signal;
non-access stratum NAS dedicated signaling;
radio resource control RRC dedicated signaling;
media access control MAC layer dedicated signaling; and
physical layer dedicated signaling.

7. The method for initiating establishment of a BSC link according to claim 5, wherein the first information is further used to implement a TAG operation, comprising at least one of the following: select, inventory, challenge, access, query, read, and write.

8. The method for initiating establishment of a BSC link according to any one of claims 2 to 5, wherein the method further comprises:
after the first device receives the first information or responds to the first information, establishing, by the first device, a BSC connection; and
receiving, by the first device, BSC data transmitted by the network side device, and transmitting the BSC data to the BSC terminal.

9. The method for initiating establishment of a BSC link according to any one of claims 1 to 5, wherein the method further comprises:
transmitting, by the first device, BSC data to the BSC terminal, wherein the BSC data is transmitted by the BSC terminal to the network side device through backscattering.

10. The method for initiating establishment of a BSC link according to any one of claims 2 to 5, wherein the method further comprises:
receiving, by the first device, BSC data transmitted by the BSC terminal and forwarding the BSC data to the network side device.

11. The method for initiating establishment of a BSC link according to claim 10, wherein the receiving, by the first device, BSC data transmitted by the BSC terminal and forwarding the BSC data to the network side device comprises:
in a case that the first device receives the first information, receiving, by the first device, the BSC data transmitted by the BSC terminal and forwarding the BSC data to the network side device, wherein the first information comprises transmission start indication information for the BSC data; or
in a case that the first device receives the first tag indication information, receiving, by the first device, the BSC data transmitted by the BSC terminal and forwarding the BSC data to the network side device.

12. The method for initiating establishment of a BSC link according to claim 10, wherein the method further comprises:
in a case that the first device receives the first information, stopping receiving, by the first device, the BSC data transmitted by the BSC terminal and stopping forwarding the BSC data to the network side device, wherein the first information comprises transmission stop indication information for the BSC data.

13. The method for initiating establishment of a BSC link according to any one of claims 2 to 5, wherein the method further comprises:
initiating, by the first device, a paging response to the network side device; or
transmitting, by the first device, an acknowledgment message of the first information to the network side device.

14. The method for initiating establishment of a BSC link according to claim 13, wherein the initiating, by the first device, a paging response to the network side device comprises:
transmitting, by the first device, an RRC connection establishment request message to the network side device, wherein an establishment cause field of the RRC connection establishment request message comprises at least one of the following:
indication information for initiating establishment of the BSC link;
indication information for BSC uplink establishment or indication information for BSC downlink establishment;
indication information for BSC uplink data forwarding or indication information for BSC downlink data forwarding; and
BSC transmission mode information; wherein
the BSC transmission mode information comprises at least one of the following: a transmission start time, a transmission duration, a pause duration, and a transmission period.

15. The method for initiating establishment of a BSC link according to any one of claims 2 to 5, wherein the first device is a radio frequency source; and the first device starts to supply energy to the BSC terminal in any one of the following cases:
in a case that the first device receives the first information or responds to the first information; and
in a case that the first device receives the first tag indication information or responds to the first tag indication information.

16. A method for initiating establishment of a backscatter communications BSC link, applied to a BSC system, wherein the BSC system comprises a first device, a network side device, and a BSC terminal, and the method comprises:
transmitting, by the network side device, first information to a target device, wherein the first information is used to initiate establishment of the BSC link, and the target device comprises at least one of the following: the first device and the BSC terminal.

17. The method for initiating establishment of a BSC link according to claim 16, wherein the transmitting, by the network side device, first information to a target device comprises:
transmitting, by the network side device, the first information to the first device; or
transmitting, by the network side device, the first information to the BSC terminal, wherein the first information is used by the BSC terminal to transmit first tag indication information to the first device through backscattering, and the first tag indication information is used to initiate establishment of the BSC link.

18. The method for initiating establishment of a BSC link according to claim 17, wherein the first information comprises at least one of the following:
indication information for initiating establishment of the BSC link;
indication information for BSC uplink establishment or indication information for BSC downlink establishment;
indication information for BSC uplink data forwarding or indication information for BSC downlink data forwarding; and
BSC transmission mode information; wherein
the BSC transmission mode information comprises at least one of the following: a transmission start time, a transmission duration, a pause duration, and a transmission period.

19. The method for initiating establishment of a BSC link according to claim 17, wherein the first tag indication information comprises at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; wherein
the BSC transmission mode information comprises at least one of the following: a transmission start time, a transmission duration, a pause duration, and a transmission period.

20. The method for initiating establishment of a BSC link according to claim 16, wherein the first information is used to implement at least one of the following:
instructing the first device to establish a BSC uplink or a BSC downlink;
instructing the first device to release a BSC uplink or a BSC downlink;
instructing the BSC terminal to establish a BSC uplink or a BSC downlink;
instructing the BSC terminal to release a BSC uplink or a BSC downlink;
instructing the first device to start transmission of BSC data or stop transmission of BSC data;
instructing the BSC terminal to start transmission of BSC data or stop transmission of BSC data; and
indicating BSC transmission mode information; wherein
the BSC transmission mode information comprises at least one of the following: a transmission start time, a transmission duration, a pause duration, and a transmission period.

21. The method for initiating establishment of a BSC link according to any one of claims 17 to 20, wherein the first information is indicated in at least one of the following manners:
a short message comprised in a paging message;
a paging cause comprised in a paging message;
paging indication information;
downlink control information DCI;
a sequence signal;
non-access stratum NAS dedicated signaling;
radio resource control RRC dedicated signaling;
media access control MAC layer dedicated signaling; and
physical layer dedicated signaling.

22. The method for initiating establishment of a BSC link according to any one of claims 17 to 20, wherein the method further comprises:
transmitting, by the network side device, BSC data to the first device; or
receiving, by the network side device, BSC data transmitted by the first device, wherein the BSC data is transmitted by the BSC terminal to the first device.

23. The method for initiating establishment of a BSC link according to claim 22, wherein the transmitting, by the network side device, BSC data to the first device comprises:
after the first device receives the first information or responds to the first information, transmitting, by the network side device, the BSC data to the first device.

24. The method for initiating establishment of a BSC link according to any one of claims 16 to 20, wherein the method further comprises:
receiving, by the network side device, BSC data transmitted by the BSC terminal, wherein the BSC data is transmitted through backscattering by the BSC terminal after receiving the BSC data of the first device.

25. The method for initiating establishment of a BSC link according to any one of claims 17 to 20, wherein the method further comprises:
receiving, by the network side device, an acknowledgment message of the first information transmitted by the first device; or
receiving, by the network side device, an RRC connection establishment request message transmitted by the first device, wherein an establishment cause field of the RRC connection establishment request message comprises at least one of the following:
indication information for initiating establishment of the BSC link;
indication information for BSC uplink establishment or indication information for BSC downlink establishment;
indication information for BSC uplink data forwarding or indication information for BSC downlink data forwarding; and
BSC transmission mode information; wherein
the BSC transmission mode information comprises at least one of the following: a transmission start time, a transmission duration, a pause duration, and a transmission period.

26. A method for initiating establishment of a backscatter communications BSC link, applied to a BSC system, wherein the BSC system comprises a first device, a network side device, and a BSC terminal, and the method comprises:
receiving, by the BSC terminal, first information transmitted by the network side device; wherein the first information is used to initiate establishment of the BSC link; and
transmitting, by the BSC terminal, first tag indication information to the first device through backscattering based on the first information.

27. The method for initiating establishment of a BSC link according to claim 26, wherein the first tag indication information comprises at least one of the following:
indication information for BSC uplink establishment or indication information for BSC downlink establishment;
indication information for BSC uplink release or indication information for BSC downlink release;
acknowledgment information for BSC uplink establishment or acknowledgment information for BSC downlink establishment;
acknowledgment information for BSC uplink release or acknowledgment information for BSC downlink release;
transmission start indication information for BSC data;
transmission stop indication information for BSC data;
transmission start or stop acknowledgment information for BSC data; and
BSC transmission mode information; wherein
the BSC transmission mode information comprises at least one of the following: a transmission start time, a transmission duration, a pause duration, and a transmission period.

28. The method for initiating establishment of a BSC link according to claim 26 or 27, wherein the method further comprises:
transmitting, by the BSC terminal, BSC data to the first device; or
transmitting, by the BSC terminal, BSC data to the network side device, wherein the BSC data is transmitted through backscattering by the BSC terminal after receiving the BSC data of the first device.

29. An apparatus for initiating establishment of a BSC link, applied to a BSC system, wherein the BSC system comprises a first device, a network side device, and a BSC terminal, and the apparatus comprises:
a receiving module, configured to receive first information from the network side device, wherein the first information is used to initiate establishment of the BSC link.

30. An apparatus for initiating establishment of a BSC link, applied to a BSC system, wherein the BSC system comprises a first device, a network side device, and a BSC terminal, and the apparatus comprises:
a transmitting module, configured to transmit first information to a target device, wherein the first information is used to initiate establishment of the BSC link, and the target device comprises at least one of the following: the first device and the BSC terminal.

31. An apparatus for initiating establishment of a BSC link, applied to a BSC system, wherein the BSC system comprises a first device, a network side device, and a BSC terminal, and the apparatus comprises:
a receiving module, configured to receive first information transmitted by the network side device; wherein the first information is used to initiate establishment of the BSC link; and
a transmitting module, configured to transmit first tag indication information to the first device through backscattering based on the first information.

32. A first device, comprising a processor and a memory, wherein the memory stores a program or an instruction executable on the processor, and when the program or the instruction is executed by the processor, the steps of the method for initiating establishment of a BSC link according to any one of claims 1 to 15 are performed.

33. A network side device, comprising a processor and a memory, wherein the memory stores a program or an instruction executable on the processor, and when the program or the instruction is executed by the processor, the steps of the method for initiating establishment of a BSC link according to any one of claims 16 to 25 are performed.

34. A BSC Terminal, comprising a processor and a memory, wherein the memory stores a program or an instruction executable on the processor, and when the program or the instruction is executed by the processor, the steps of the method for initiating establishment of a BSC link according to any one of claims 26 to 28 are performed.

35. A readable storage medium, storing a program or an instruction, wherein when the program or the instruction is executed by the processor, the method for initiating establishment of a BSC link according to any one of claims 1 to 15 is performed, the method for initiating establishment of a BSC link according to any one of claims 16 to 25 is performed, or the method for initiating establishment of a BSC link according to any one of claims 26 to 28 is performed.
